# EUROPEAN PATENT SPECIFICATION

(11) **EP 4 455 620 B1**
(45) Date of publication and mention of the grant of the patent: **04.11.2026**
(21) Application number: 24170021.0
(22) Date of filing: 12.04.2024
(51) Int. Cl.: G01F 1/002, G01F 1/663, G01F 15/061, G01F 15/07, G01S 7/02, G01S 13/34, G01S 13/88, G01S 13/58, G01S 13/42, G01F 23/00, G01F 1/00

(54) **MULTIPOINT RADAR FLOW VELOCITY METER, REMOTE TERMINAL UNIT, AND RIVER FLOW MEASUREMENT SYSTEM**
MEHRPUNKT-RADAR-DURCHFLUSSGESCHWINDIGKEITSMESSER, FERNBEDIENUNGSTERMINAL UND FLUSSMESSSYSTEM
DÉBITMÈTRE RADAR MULTIPOINT, UNITÉ TERMINALE DISTANTE ET SYSTÈME DE MESURE DE DÉBIT DE RIVIÈRE

(30) Priority: 14.04.2023 KR 20230049358; 02.05.2023 KR 20230056848
(43) Date of publication of application: 30.10.2024
(73) Proprietor: Mirerotack Co., Ltd, Bucheon-si Gyeonggi-do 14523 (KR)
(72) Inventor: LEE, Seung Kyu, 14535 Bucheon-si (KR)
(74) Representative: Noréns Patentbyrå AB

(56) References cited:
- WO-A1-2023/003017
- CN-A- 112 819 235
- CN-B- 107 202 570
- KR-B1- 102 476 534
- US-A1- 2022 113 173

## Description

The present application claims priority to Korean Patent Application No. 10-2023-0049358, filed April 14, 2023 and Korean Patent Application No. 10-2023-0056848, filed May 2, 2023.

### BACKGROUND

### Technical Field

The present invention relates to a flow measurement system, and a multipoint radar flow velocity meter and an RTU for the flow measurement system. The present invention relates to a flow measurement system that creates distance information and flow velocity information of each of a plurality of measurement areas in a Field of View (FOV) zone of the surface of a river using radar electromagnetic waves by means of a multipoint radar flow velocity meter and that calculates a flow rate using the distance information and flow velocity information of each of the plurality of measurement areas, and meteorological observation information, level information, etc. of a river by means of an RTU, and a multipoint radar flow velocity meter and an RTU for the flow measurement system.

### Description of the Prior art

It is necessary to monitor the flow rate of rivers in order to efficiently use the rivers and prevent disasters due to water such as a flood. In particular, flow rate data is the most basic and important data for water use, water control, and water quality management, such as efficient plan and management of water resources, water quality management such as a total water pollution load management system, designing of hydraulic structures, and flood prediction.

Real-time data, accumulated data over a long term, and continuous flow rate data are needed to improve usability of the flow rate of rivers. As direct method for producing continuous flow rate data, there are a method of making and using a level-flow rating curve from the relationship between flow rates measured a limited number of times and the level of a river at the same times, a method of using an automatic flow rate measurement facility that measures a flow velocity or a flow rate in real time by installing a facility at a river that can measure a flow velocity or a flow rate at a river, etc. Further, as an indirect method of producing flow rate data, there is a method of using a structure, etc. such as a slope-area method.

However, this prior art has defects of low accuracy in measurement of a flow velocity, a limited measurement range of a flow velocity, and a need of expensive flow velocity measurement equipment. Accordingly, it is continuously required to improve systems for measuring a flow velocity and a flow rate.

An 'Electric wave surface current meter' of Korean Patent No. 10-0204980 and a 'Microwave water surface current meter for low and high flows' of Korean Patent N. 10-1152454 were designed to be able to safely, simply, and accurately measure the flow rate of a river even without direct contact with water. These meters acquire a surface flow velocity by emitting an electromagnetic wave to a water surface that has irregular waves, receiving a signal reflecting from the water surface, and computing a frequency by Doppler effect.

The prior art that measures a flow velocity of a river using electromagnetic waves can measure a flow velocity at one point at one time, so, in order to measure flow velocities at several points, it is required to measure a flow velocity while changing the measurement direction of a flow velocity meter or measure flow velocities using several flow velocity meters. Accordingly, the prior art wastes a lot of manpower and time.

Further, according to the prior art, when the flow velocity of a river is low, the accuracy of the flow velocity that is measured by a flow velocity meter is low, and when a flow velocity is measured at a point departing from the flow direction of a river, an error is generated, but this error is not corrected.

US2022/113173 discloses a method that measures surface velocity of a fluid having a free surface flowing through a pipe or a channel. A microwave beam is sent by patch antenna including an emitting patch area and receiving patch areas parallel to the emitting patch area. Microwave signals reflected by the moving fluid free surface are received on the receiving patch areas separated by a predetermined distance. The patch antennae are either in horizontal or vertical planes parallel to the average fluid velocity. For each microwave signal received, a phase shift between microwave signals received by different patch areas is determined to calculate azimuth angles and azimuth position of reflectors on the fluid surface or to calculate the elevation angle corresponding to each signal received. Based on Doppler frequency shifts between the sent and received microwaves and corresponding phase shifts, lateral and/or longitudinal distribution of the surface velocity of the fluid is calculated. WO 2023/003017 A1 discloses a system with one or more transmitting antenna elements for transmitting radar waves to a water surface area of a river; a plurality of receiving antenna elements for receiving the reflected waves of the radar waves; and a water level detection device wherein estimation of direction of arrival of the radar waves involves a digital beamforming method.

CN107202570 discloses an integrated device for monitoring water level, velocity and flow, a monitoring system and a monitoring method. The device includes a radar water level measurement module, a radar flow velocity measurement module, a wind speed measurement module and a flow calculation module. The flow velocity measurement module and the wind velocity measurement module are respectively connected with the flow calculation module; the radar water level measurement module is used for non-contact measurement of the real-time water level data of the river/channel; the radar flow measurement module is used for the non-contact measurement of the real-time surface of the river/channel Flow speed data; wind speed measurement module, used to measure real-time wind speed data to correct the water surface flow speed; flow calculation module, used to calculate the current moment river course according to the water level data, flow speed data and wind speed data, combined with the input related parameters of the river course/channel control section/channel controls the flow size of the section. The invention can monitor the water level and flow velocity of the river course/canal in real time, and can realize real-time flow monitoring.

### SUMMARY

The present invention has been made in an effort to solve the problems of the prior art and an objective of the present invention is to provide a flow measurement system that simultaneously measure distance information and flow velocity information of each of a plurality of measurement areas in a Field of View (FOV) zone of the surface of a river, to which a transmission electromagnetic wave is emitted, using a multipoint radar flow velocity meter, that can accurately measure a flow velocity at a measurement area with a low flow velocity, that accurately measures flow velocities at areas departing from the flow direction of a river of measurement areas of an FOV zone through correction, and that accurately measures the flow rate of a river by converting the information obtained from the multipoint radar flow velocity meter and various meteorological observation information into big data and by data-mining using an RTU.

In order to achieve the objectives, a multipoint radar flow velocity meter according to the present invention is disclosed according to claim 1.

Preferred embodiments of the multipoint radar flow velocity meter are disclosed according to claims 2-5.

In second aspect of the claimed invention, an Remote Terminal Unit is disclosed according to claim 6.

Preferred embodiments of the Remote Terminal Unit are disclosed according to claims 7-8.

According to a third aspect of the claimed invention, a river flow measurement system comprising a multipoint radar flow velocity meter according to any one of claim 1-5; and an RTU according to any one of claims 6-8 is disclosed according to claim 9.

The flow measurement system according to the present disclosure includes a multipoint radar flow velocity meter that can remarkably reduce time, costs, and manpower by measuring distance information and flow velocity information of a plurality of areas in a Field Of View (FOV) zone on the surface of a river and that can accurately measure the flow rate even of a river with a low flow velocity and an RTU that can accurately measure the flow rate of a river by accurately measuring the flow velocity on the surface of the river by converting information created by the multipoint radar flow velocity meter and various meteorological observation information such as the wind direction, wind velocity, and rainfall around the river into big data and by data-mining. Accordingly, the present invention is very useful for development of industry.

### BRIEF DESCRIPTION OF THE DRAWINGS

The above and other objectives, features and other advantages of the present invention will be more clearly understood from the following detailed description when taken in conjunction with the accompanying drawings, in which:
FIG. 1 is a diagram showing a schematic configuration of a river flow measurement system according to an embodiment of the present invention;
FIG. 2 is a block diagram showing the configuration of a multipoint radar flow velocity meter according to the present invention;
FIG. 3 is a view showing an example of an actual product of the multipoint radar flow velocity meter according to the present invention;
FIG. 4 is a diagram showing a process of measuring distance information and flow velocity information of a measurement area;
FIGS. 5A and 5B are diagrams illustrating correcting the flow velocity at a measurement area by applying the height and the measurement direction of a flow velocity meter;
FIGS. 6A and 6B are diagrams illustrating a method of calculating a distance while excluding signals reflecting from rocks when calculating the distance between a flow velocity meter and a level measurement area of a river;
FIGS. 7A and 7B are diagrams illustrating generation of multiple beams through digital beam forming;
FIG. 8 is a diagram showing the entire process of a river flow measurement method according to an embodiment of the present invention;
FIG. 9 is a diagram showing the detailed process of step S2 in FIG. 8;
FIG. 10 is a diagram showing the detailed process of step S3 in FIG. 8;
FIG. 11, FIG. 12A, and FIG. 12B are diagrams illustrating a plurality of areas in a Field Of View (FOV) zone on the surface of a river; and
FIGS. 13A and 13B are diagrams showing a method of measuring a flow velocity of a river in the prior art.

### DETAILED DESCRIPTION

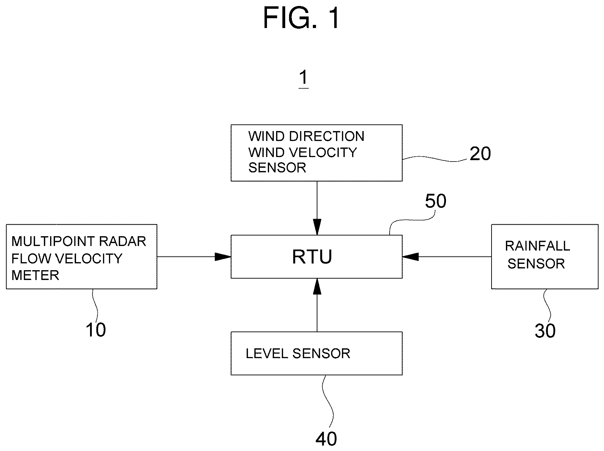

FIG. 1 is a diagram showing a schematic configuration of a river flow measurement system 1 according to an embodiment of the present invention.

Referring to FIG. 1, the river flow measurement system 1 may include a multipoint radar flow velocity meter 10, a wind direction/wind velocity sensor 20, a rainfall sensor 30, a level sensor 40, and an RTU 50.

The multipoint radar flow velocity meter 10 can transmit an radar electromagnetic wave (hereafter, 'transmission electromagnetic wave'), receive a plurality of reflective electromagnetic waves (hereafter, 'reception electromagnetic waves') generated by reflection of the transmission electromagnetic wave from a Field Of View (FOV) zone on the surface of a river, and create distance information and flow velocity information of the surface of the river and relevant information on the basis of the information of the transmission electromagnetic wave and the plurality of reception electromagnetic waves. The FOV zone may be an area projected on the surface of a river.

In particular, the multipoint radar flow velocity meter 10 may be a flow velocity meter that creates distance information and flow velocity information of each of a plurality of measurement areas (multipoint areas) in an FOV zone.

The multipoint radar flow velocity meter 10 according to the present invention may be installed at a specific point on a bridge over a river.

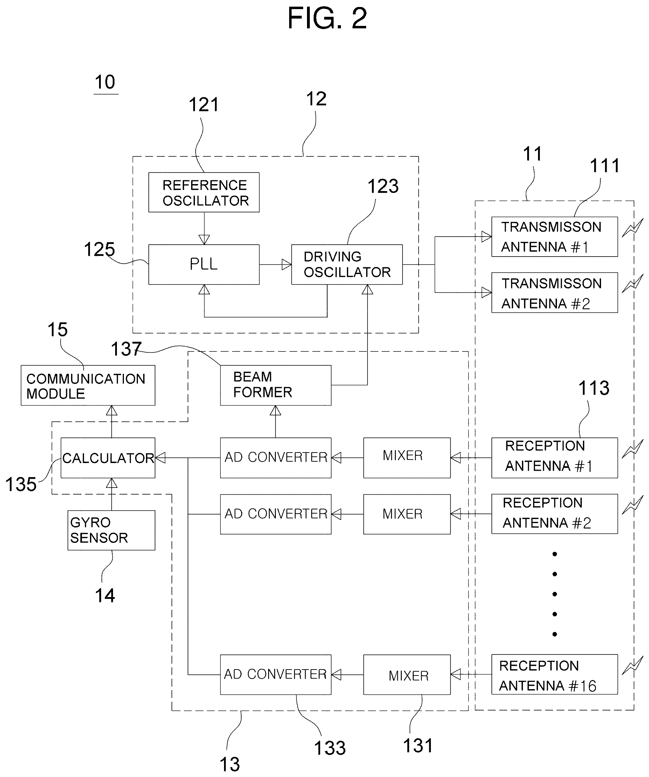

FIG. 2 is a block diagram schematically showing the configuration of the multipoint radar flow velocity meter 10 according to the present invention and the present invention includes an antenna module 11, an oscillator 12, a processor module 13, a gyro sensor 14, and a communication module 15.

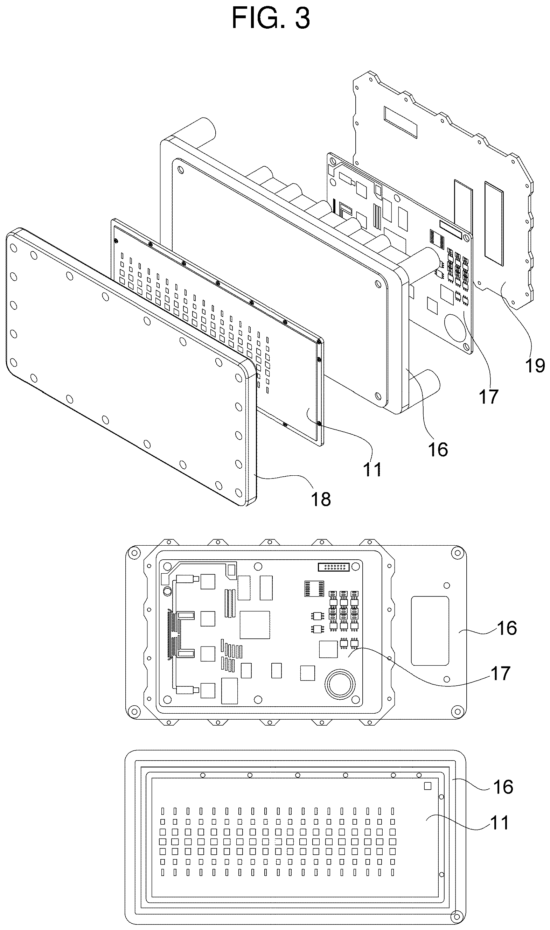

Referring to FIG. 3, the multipoint radar flow velocity meter 10 according to the present invention has a body 16, the antenna module 11 is mounted on the front of the body, a control board 17 on which the oscillator 12, the processor module 13, the gyro sensor 14, the communication module 15, etc. are mounted is mounted on the rear of the body, and covers 18 and 19 are coupled to both sides of the body, thereby covering and protecting the antenna module 11 and the control board 17.

The antenna module 11 includes a transmission antenna 111 and a plurality of reception antennas 113.

Referring to FIG. 3, the transmission antenna 111 and the plurality of reception antennas 113 may be spaced predetermined distances apart from each other on the same plane. That is, the transmission antenna 111 and the plurality of reception antennas 113 may be disposed on the same plane. When the transmission antenna 111 and the plurality of reception antennas 113 are disposed on the same plane, more accurate measurement of a distance, a flow velocity, etc. can be achieved.

The transmission antenna 111 transmits a transmission electromagnetic wave and the plurality of reception antennas 113 receives a plurality of reception electromagnetic waves generated by reflection of the transmission electromagnetic wave from an FOV zone on the surface of a river.

The transmission antenna 111 prevents errors in which a transmission electromagnetic wave is not transmitted by using 2 channels and the reception antenna 113 prevents areas in which a reception electromagnetic wave is not received in a plurality of measurement areas of FOV (Field of View) zone by using 16 channels.

The radar electromagnetic wave that is used by the antenna module 11 is in a frequency band composed of multiple beams having a center frequency of 24.15 GHz and the characteristics are as in the following Table 1 and Table **2.**

**[Table 1]**

| Items | Characteristics | Remarks |
|---|---|---|
| Center frequency | 24.15 GHz | |
| Bandwidth | < 200 MHz | |
| Power | < 20 dBm (100mW) EIRP. | |

**[Table 2]**

| Items | Characteristics | | Remarks |
|---|---|---|---|
| | Transmission | Reception | |
| Horizontal beam width | ±35° | ±90° | -3 dB |
| Vertical beam width | ±15° | ±15° | -3 dB |
| Maximum gain | 14 dBi | 10 dBi | |
| Side-lobe Suppression | > 20 dB | > 20 dB | |

Referring to FIG. 2, the oscillator 12 includes a reference oscillator 121 that generates an electromagnetic wave by oscillating DC power, a driving oscillator 123 that generates, amplifies and outputs a radar electromagnetic wave composed of multiple beams of a frequency band having a center frequency of 24.15 GHz, that is, a transmission frequency to the transmission antenna 111 using the electromagnetic wave generated by the reference oscillator 121, and a Phase Locked Loop 125 connecting the reference oscillator 121 and the driving oscillator 123.

The PLL 125 fixes a phase such that the frequencies of multiple beams that are output from the driving oscillator 123 do not change.

The radar electromagnetic wave that is generated by the oscillator 12 is Frequency Modulated Continuous Wave (FMCW), an electromagnetic wave is transmitted in an image form to an FOV zone and a reflective wave is received, whereby it is possible to calculate distance information and flow velocity information of all of a plurality of measurement areas and it is possible to recognize solid objects as well such as rocks.

The processor module 13 creates distance information and flow velocity information of each of a plurality of measurement areas in the FOV zone on the basis of an installation angle of the antenna module 11 and information of the transmission electromagnetic wave and the plurality of reception electromagnetic waves.

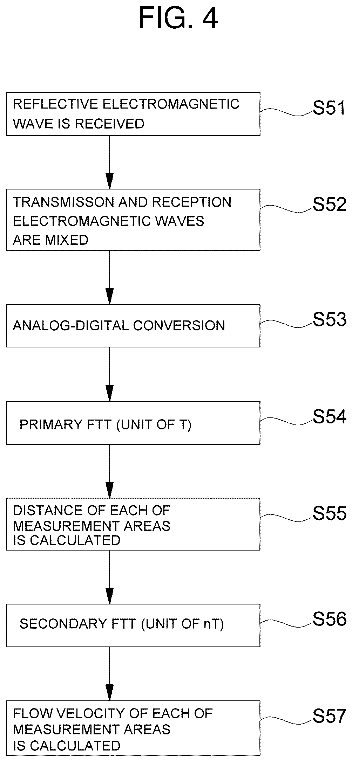

FIG. 4 shows a process of measuring distance information and flow velocity information of a measurement area. Referring to FIGS. 2 and 4, the processor module 13 includes a mixer 131 that mixes (S52) a reception electromagnetic wave received (S51) and transmitted by the reception antenna 113 and a transmission electromagnetic wave generated and transmitted by the oscillator 12, an AD converter 133 that converts (S53) an analog signal output from the mixer 131 into a digital signal, a calculator 135 that calculates distance information and flow velocity information of the measurement area using the digital signal of the AD converter 133, and a digital beam former 137 that generates multiple beams of a frequency band corresponding to the transmission electromagnetic wave by detecting an output phase of the AD converter 133 and applying a weight to the output phase.

The calculator 135 can calculate (S55) distance information of each of measurement areas in an FOV zone by applying primary Fast Fourier Transform (FFT) (S54) to a mixed signal of a transmission electromagnetic wave and a reception electromagnetic wave that has been converted into a digital signal and can calculate (S57) flow velocity information of each of a plurality of measurement areas by applying secondary FFT (S56) to a digital reflective signal.

An FMCW radar electromagnetic wave is an electromagnetic wave that is transmitted and receive in an image form, so it is possible to know the reception direction of a reception electromagnetic wave that is reflected and received, it is possible to calculate a distance by acquiring time until an electromagnetic wave is received after being transmitted through primary FFT, and it is possible to calculate a flow velocity by acquiring a Doppler frequency (fd=f1-f2) that is the difference between the frequency f1 of a transmission frequency and a reception frequency f2 through secondary FFT.

Doppler effect means that there is a relative frequency difference (fd=f1-f2) between to a source that generates waves and a moving object and the frequency difference (fd=f1-f2) is defined as in the following equation by the velocity v of an object, the wavelength λ of waves, and the angle θ between the velocity direction of the object and the traveling direction of waves. $fd = f 1 - f 2 = \left(2v\div λ\right) \times cosθ$

Since it is required to receive a reflective wave by motion of water surface in order to measure the velocity of a river, there should be at least a minimum wave height, and the more the dispersion and the higher the flow velocity on a water surface, the higher the reliability of a measurement result. The flow velocity on a water surface is computed by transmitting a predetermined frequency to a water surface, receiving a reflective wave by movement of the water surface, and comparing the frequency of the transmitted and received signals.

When the flow velocity of a river is low, measuring the flow velocity by applying a MUSIC algorithm rather than FFT can increase accuracy. The MUSIC algorithm, which is a spectrum analysis technique that applies the principle that a noise subspace and a signal subspace are orthogonal to each other when measuring a flow velocity, has the advantage that it is robust against noises and can recognize a frequency with an improved resolution in comparison to FFT.

The gyro sensor 14 measures and provides the installation angle of the multipoint radar flow velocity meter 10, that is, the installation angle of the antenna module 11.

The communication module 15 transmits distance information, flow velocity information, etc. of a plurality of measurement areas calculated by the processor module 13 to the RTU 50. To this end, the communication module 15 may include at least one of a near field communication module or a telecommunication module.

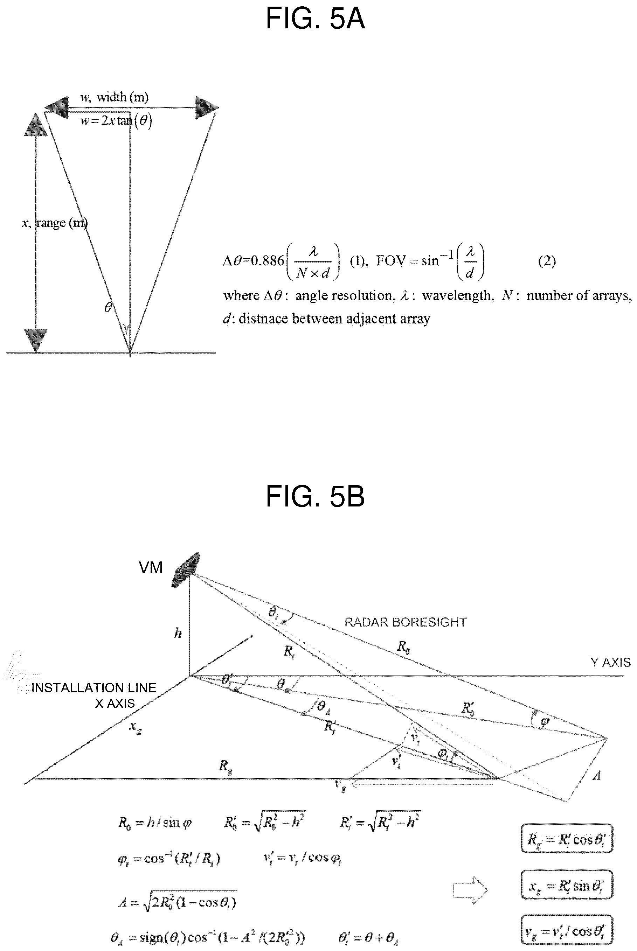

The multipoint radar flow velocity meter 10 can use a digital beam forming algorithm to measure a flow velocity by selecting several angles and positions on the basis of setting of distance and angle. FIGS. 5A to 7B are diagrams illustrating matters relating thereto.

FIGS. 5A and 5B show the influence on an actual flow velocity Vg by an installation height h and an angle of a measurement area 52 departing from a Y-axial direction.

The reason of measuring the distance R of a measurement area and then measuring the flow velocity at the measurement area in the present invention is for applying the installation height h of the flow velocity meter 10 and the angle of the measurement area 52 departing from the Y-axial direction to measurement of a flow velocity.

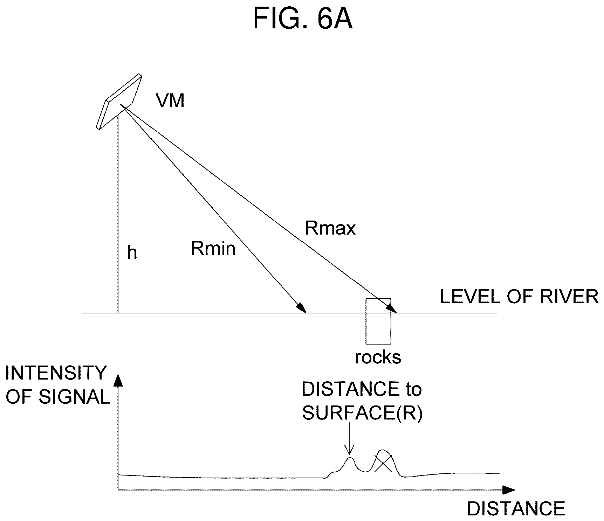

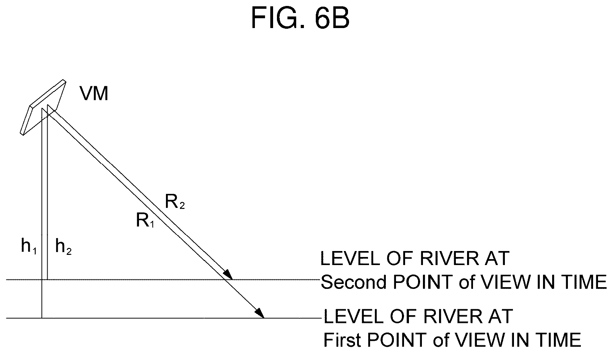

FIGS. 6A and 6B are diagrams illustrating matters that should be considered in measurement of an actual velocity.

A worker can obtain the height of the flow velocity meter 10 and the height h0 of the surface of a river through direct surveying in initial installation and it is possible to calculate the distance R0 of a measurement area by transmitting a radar electromagnetic wave in the installation direction (Y-axial direction; boresight of 0 degree) of the flow velocity meter 10 directly facing the flow direction of the river, that is, it is possible to compute the height h0 from h0=R0×sinθ using the angle θ of a gyro sensor, that is, the installation angle θ of the flow velocity meter 10.

When the height of the flow velocity meter 10 from the surface of the river is changed by level variation of the river, it is possible to compute the height h due to the level variation from h=h0×R÷R0 using the height h0 in initial installation, the distance R0 of the measurement area in initial installation, and a distance R of the measurement area measured by emitting a radar electromagnetic wave in the same direction after level variation.

When there is a fixed object 57 such as a rock in a river, the specific area with the fixed object is excluded from calculation of a distance R, calculation of the amount of level variation h0-h, calculation of a flow velocity, etc. It is possible to determine whether there is a fixed object on the basis of the intensity of a reception electromagnetic wave.

According to the present invention, the multipoint radar flow velocity meter 10 can use a digital beam forming algorithm to measure a flow velocity by selecting several angles and positions on the basis of setting of distance and angle. It is possible to analyze an FOV and a search width depending on a distance through beam forming. It is possible to avoid electromagnetic wave interference between the reception antennas 113 by adding or removing the angle of a reception electromagnetic wave from the main lobe (or boresight) of a radar electromagnetic wave, and the maximum range of the surface width of a river can be adjusted.

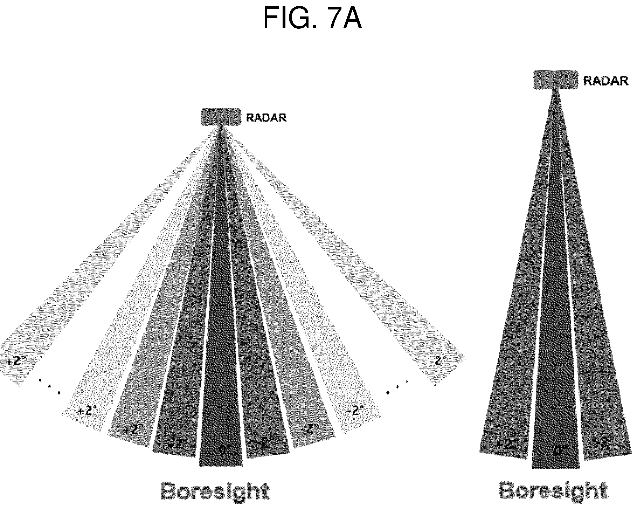

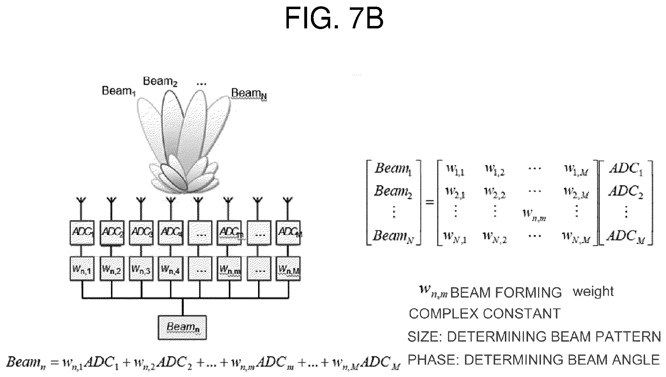

A radar electromagnetic wave is composed of a plurality of beams (multiple beams) of which frequencies are slightly different in a frequency band and the principle of generating multiple beams is as shown in FIGS. 7A and 7B.

Referring to FIGS. 7A and 7B, when the number of arranged reception antennas 113 is small, the beam with is large, so accuracy may decrease. Accordingly, 16 channels of reception antennas 113 are applied to the multipoint radar flow velocity meter 10 of the present invention. Multiple beams can be generated by determining a beam pattern, calculating each ADC output phase, and the multiplying the output phase by an angle weight. The digital beam former 137 of the processor module 13 calculates the frequencies of the multiple beams and transmits the calculated frequencies of the multiple beams to the oscillator 12, and the oscillator 12 oscillates and transmits a transmission electromagnetic wave of a frequency band according to the multiple beams.

Referring to FIG. 1 again, the wind direction/wind velocity sensor 20 may be a meteorological device that measures the wind direction, the wind velocity, and the flow rate of wind blowing around a river. To this end, the wind direction/wind velocity sensor 20 may be equipped with various sensors. The wind direction/wind velocity sensor 20 may be further equipped with a communication module to transmit measured wind direction information and wind velocity information to the RTU 50.

The rainfall sensor 30 may be a meteorological device that measures a rainfall that falls on a river. In this case, the rainfall may be a rainfall per unit time (e.g., minute). The rainfall sensor 30 may be equipped with a communication module to transmit measured rainfall information to the RTU 50.

The level sensor 40 may be a device that measures the level of a river. For example, the level sensor 40 can measure a level at the center area of the surface width of a river. The level sensor 40 may be equipped with a communication module to transmit a measured level of a river to the RTU 50.

The RTU (Remote Terminal Unit) 50 can correspond to a server that calculates the flow velocity and the flow rate of a river. The RTU 50 can measure the flow velocity and the flow rate of a river by receiving river surface-related information (distance information and flow velocity information of each of a plurality of measurement areas) that is transmitted from the multipoint radar flow velocity meter 10, meteorological observation information (a measured wind direction, a measured wind velocity, and a measured rainfall) that is transmitted from the meteorological sensors 20 and 30, and level information that is transmitted from the level sensor 40, by converting the received various information into big data, and by data-mining. To this end, the RTU 50 may include a communication module that communicates with the multipoint radar flow velocity meter 10, the meteorological sensors 20 and 30, and the level sensor 40, a storage module that stores received information, etc., and a control module that calculates the flow velocity and the flow rate on the surface of a river.

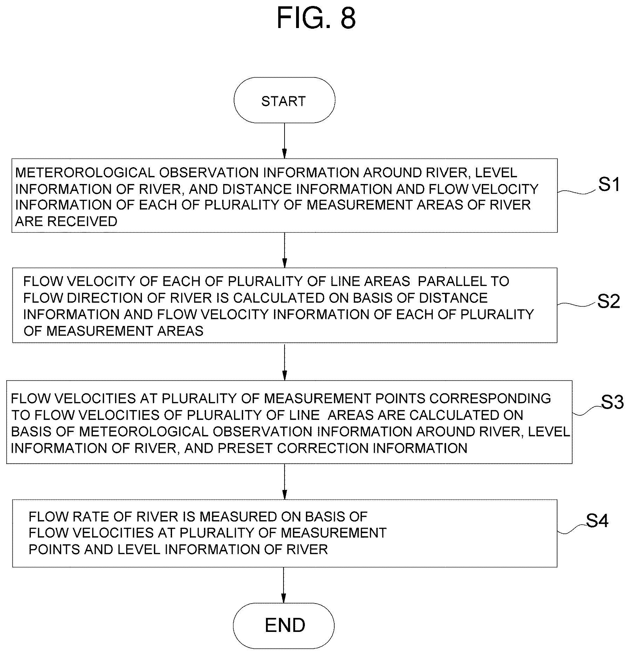

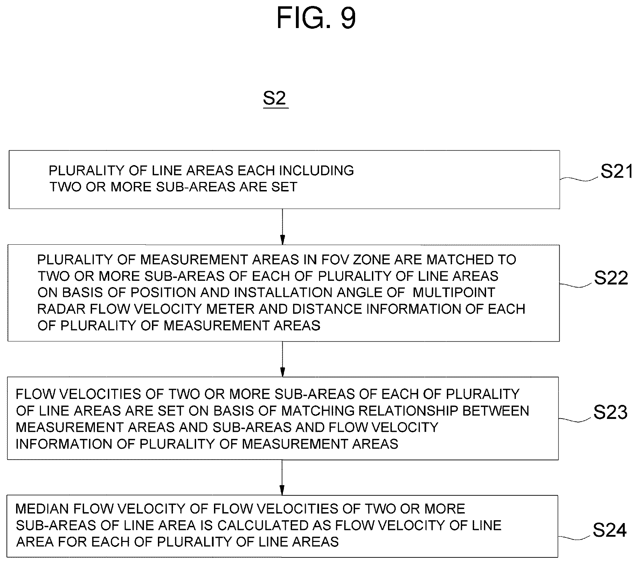

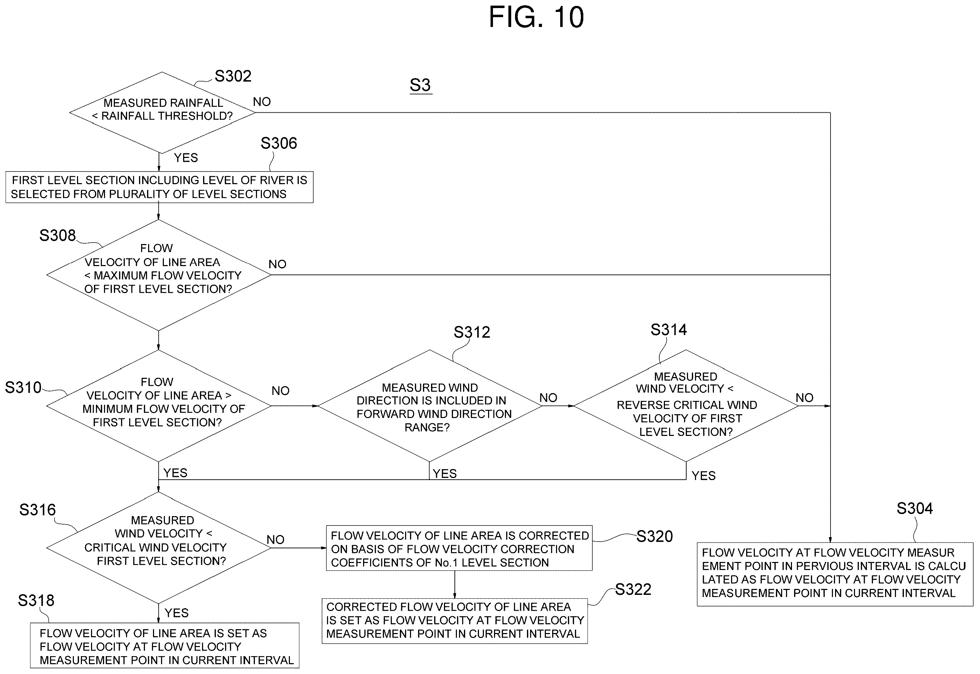

FIG. 8 schematically shows a method of measuring the flow velocity and the flow rate on the surface of a river that is performed by the RTU 50, FIG. 9 shows the detailed process of step S2 shown in FIG. 8, and FIG. 10 shows the detailed process of step S3 shown in FIG. 8.

Meanwhile, a method of measuring the flow rate of a river may be repeatedly performed on the basis of a preset interval.

In step S1, the RTU 50 can receive meteorological observation information around a river, level information of the river, and distance information and flow velocity information of each of a plurality of measurement areas of the river.

The meteorological observation information is transmitted from the meteorological sensors 20 and 30 and may include a measured rainfall, a measured wind direction, and a measured wind velocity of a river. The level information of a river can be received from the level sensor 40. The distance information and flow velocity information of each of a plurality of measurement areas of a river can be received from the multipoint radar flow velocity meter 10. Meanwhile, though not shown in FIG. 8, the RTU 50 may further acquire position information and installation angle information of the multipoint radar flow velocity meter 10 from the multipoint radar flow velocity meter 10.

In step S2, the RTU 50 can calculate a flow velocity at each of a plurality of line areas that is parallel to the flow direction of a river on the basis of distance information and flow velocity information of each of a plurality of measurement areas. The flow velocity at each of a plurality of line areas may correspond to the flow velocity at each of a plurality of flow velocity measurement points according to the prior art.

Hereafter, step S 2 is described in more detail with reference to FIG. 9, FIG. 11, FIG. 12A, and FIG. 12B.

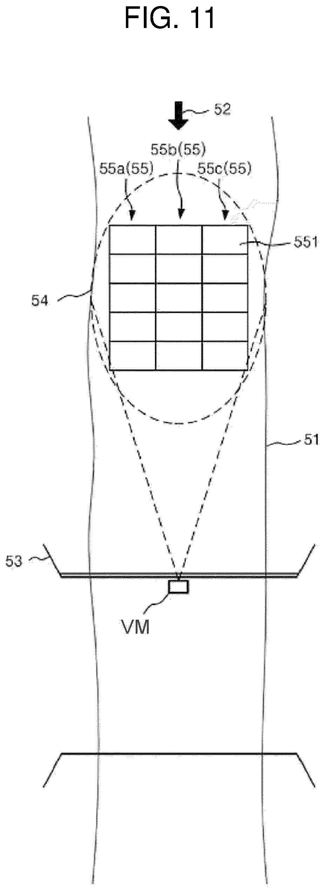

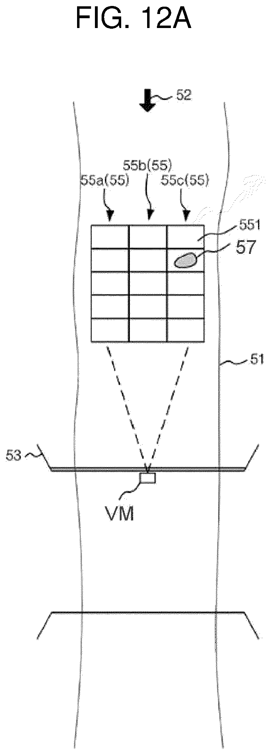

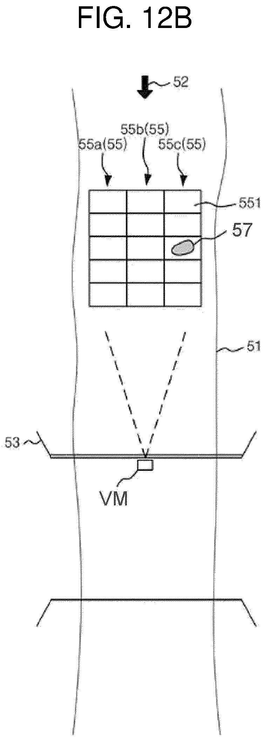

For reference, an example in which one multipoint radar flow velocity meter 10 is installed at the center of the top of a bridge 53 is shown in FIG. 11, FIG. 12A, and FIG. 12B. However, the present invention is not limited thereto. As another example, one multipoint radar flow velocity meter 10 may be disposed at a certain position on the bridge 53 or two or more multipoint radar flow velocity meters 10 may be installed on the bridge 53 on the basis of the surface width of a river.

In step S21, the RTU 50 can set a plurality of line areas each including two or more sub-areas.

In detail, referring to FIG. 11, a plurality of line areas 55, which is included in an FOV zone 54 of the multipoint radar flow velocity meter 10, may be set parallel with a flow direction 52 of a river 51. The plurality of line areas 55 may be spaced apart from each other in the transverse direction of the river 51 (i.e., the width direction of the river). The plurality of line areas 55 each may include two or more sub-areas 551. In this case, two or more sub-areas 551 may be spaced apart from each other in the flow direction 52 of the river 51 in a line area 55. FIG. 11 shows three line areas 55a, 55b, and 55c each including five sub-areas 551.

Meanwhile, as shown in FIG. 11, the numbers of sub-areas 551 may be the same in the line areas 55, but, according to another embodiment, the numbers of sub-areas 551 may be different in the line areas 55. As an example, since the largest amount of water flows at the center in the transverse direction of the river 51, the line area 55 (55b in FIG. 11) at the center in the transverse direction of the river 51 may have more sub-areas 551 than other line areas 55.

In step S22, the RTU 50 can match a plurality of measurement areas in the FOV zone 54 to two or more sub-areas 551 of each of a plurality of line areas 55 on the basis of the position and installation angle of the multipoint radar flow velocity meter 10 and distance information of the plurality of measurement areas.

That is, a plurality of measurement areas for measuring a distance and a flow velocity through the multipoint radar flow velocity meter 10 and a plurality of line areas 551 for measuring the flow velocity of the river 51 may not match with each other. In particular, when the multipoint radar flow velocity meter 10 is installed at another position on the bridge 53 rather than the center of the bridge 53, a plurality of measurement areas and a plurality of line areas 551 may not match with each other. Accordingly, in step S22, the RTU 50 can match a plurality of measurement areas and a plurality of line areas 551 on the basis of the position of the multipoint radar flow velocity meter 10, the installation angle of the antenna module 11, and distance information of each of the plurality of measurement areas.

In step S23, the RTU 50 can set a flow velocity at two or more sub-areas 551 for each of a plurality of line areas 55, that is, a flow velocity at a plurality of sub-areas 551 on the basis of matching information of measurement areas and sub-areas 551 and flow velocity information of each of a plurality of measurement areas.

In step S24, the RTU 50 can calculate a median velocity of the flow velocities at two or more sub-areas of each of a plurality of line areas 55 as the flow velocity at the corresponding line area 55. As described above, the flow velocity at a line area 55 may correspond to the flow velocity at the flow velocity measurement point.

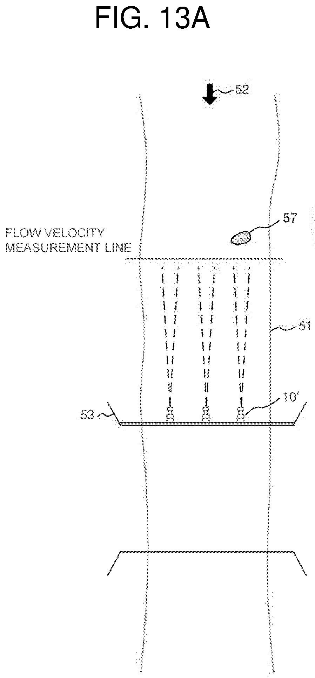

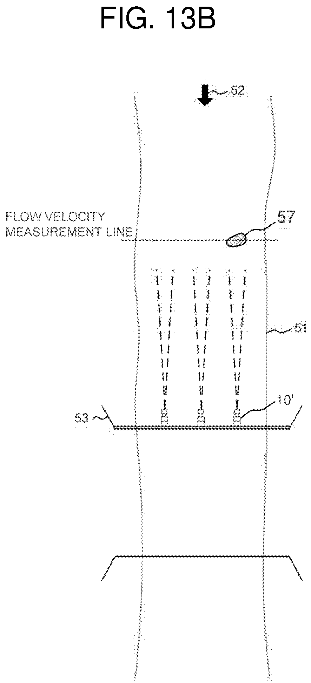

Referring to FIGS. 13A and 13B, a plurality of single-point flow velocity meters is installed in a line on a bridge 53 and measures a flow velocity in the prior art. Each of the single-point flow velocity meter can measure only the flow velocity at a flow velocity measurement point corresponding to itself by transmitting a measurement signal and receiving a reflective signal.

However, as described above, since the level of the river 51 changes in real time, the flow velocity measurement point of a single-point flow velocity meter changes in real time with the level of the river 51. That is, the higher the level of the river 51, the smaller the distance between a flow velocity measurement point and a single-point flow velocity meter, and the lower the level of the river 51, the larger the distance between a flow velocity measurement point and a single-point flow velocity meter.

However, when there is a fixed or moving reflective object 57 such as a rock in the river 51, a measurement signal transmitted from a single-point flow velocity meter hits against the reflective object 57, and accordingly, a reflective signal having very high intensity or very low intensity is received at the single-point flow velocity meter. Since such a reflective signal is received, the single-point flow velocity meter cannot accurately measure the flow velocity at the flow velocity measurement point at which the reflective object 57 exists.

In other words, since there is no reflective object 57 on a flow velocity measurement line having a first level of the river 51, all of three single-point flow velocity meters can measure the flow velocities at corresponding flow velocity measurement points on the velocity measurement line. However, since there is a reflective object 57 on a flow velocity measurement line having a second level lower than the first level of the river 51, there is a problem that the flow velocity at the velocity measurement point at which the reflective object 57 exists is not accurately measured, and as a result, the flow rate of the river 51 is not accurately measured.

Meanwhile, it is possible to estimate the flow velocity at a velocity measurement point at which a reflective object 57 exists on the basis of a flow velocity measured by other single-point flow velocity meters adjacent to a specific single-point flow velocity meter, but this is an estimated flow velocity and is not an accurate flow velocity.

FIGS. 12A and 12B are diagrams illustrating the concept of measuring a flow velocity of a river 51 using the multipoint radar flow velocity meter 10 according to an embodiment of the present invention.

As described above, the multipoint radar flow velocity meter 10 is a multipoint flow velocity meter that can measure flow velocities at all of a plurality of measurement areas, and velocities in a plurality of line areas 55 are defined to correspond to flow velocities at flow velocity measurement points. That is, the velocity at a specific line area 55 corresponds to the flow velocity at a specific flow velocity measurement point. Further, the velocity at a line area 55 is defined as the median flow velocity of the flow velocities at two or more sub-areas 551 included in the line area 55, and the position and area of an FOV zone 54 change depending on the level of the river 51.

Since a signal reflecting from a reflective object 57 generally has high signal intensity, the velocity at the line area 55 corresponding to the signal received from the reflective object 57 does not correspond to a median flow velocity and is not applied to the velocity at the line area 55. Therefore, according to the present invention, it is possible to measure all of the flow velocities at a plurality of line areas 55 in both of a river 51 having a first level (FIG. 12A) and a river 51 having a second level (FIG. 12B), and accordingly, the flow rates of the rivers can be accurately measured.

Referring to FIG. 8 again, in step S3, the RTU 50 can calculate flow velocities at a plurality of flow velocity measurement points respectively corresponding to flow velocities at a plurality of line areas on the basis of meteorological observation information around a river, level information of the river, flow velocities respectively at a plurality of line areas, and preset correction information.

The meteorological observation information and the level information were described above. The correction information may include a rainfall threshold, a range of forward wind direction, a minimum flow velocity and a maximum flow velocity of each of a plurality of preset level sections, and a plurality of flow velocity correction coefficients respectively of the plurality of level sections. The correction information may further include a reverse critical wind velocity that influences the flow velocity of a river in each of a plurality of level sections.

In particular, since the velocity of wind blowing around a river 51 influences the surface flow velocity of the river 51, a flow velocity correction coefficient can be defined to more accurately measure the surface flow velocity of the river 51. Further, since the velocity of wind blowing around a river 51 has different influences, depending on the level of the river 51, different flow velocity correction coefficients may be set for respective level sections. Further, different flow velocity correction coefficients may be set for respective level sections, depending on the direction of wind (wind direction). That is, a flow velocity correction coefficient may have different values, depending on the level of a river 51 and a wind direction. As an example, when a measured wind direction is the same as the flow direction 52 of a river 51 and a measured wind velocity exceeds a critical wind velocity according to a level section of the river 51, a flow velocity correction coefficient may be set to correspond to a value increased by 30% from the flow velocity of the river 51 when there is no wind in the same level section.

Forward and reverse wind direction range (Table 3), a plurality of level sections (Table 4), a minimum flow velocity and a maximum flow velocity in each of a plurality of level sections (Table 5), and a reverse critical wind velocity in each of a plurality of level sections (Table 6) are shown below. Meanwhile, the present invention is not limited to the tables and correction information may be changed and used in accordance with the actual environments around rivers.

**[Table 3]**

| Wind direction | Range of wind direction (°) |
|---|---|
| Forward | 310° ~ 219° |
| Reverse | 220° ~ 309° |

That is, when wind blows in a direction within the range of 310° ~ 219° from the flow direction 52 of a river 51, the wind can be defined as blowing forward over the river 51, and when wind blows in a direction within the range of 220° ~ 309°, the wind can be defined as blowing reversely over the river 51.

**[Table 4]**

| Minimum level (m) | Maximum level (m) | Level section (level) |
|---|---|---|
| 0 | 1 | 1 |
| 1 | 2 | 2 |
| 2 | 3 | 3 |
| ... | ... | ... |

**[Table 5]**

| Level section (level) | Minimum flow velocity (m/s) | Maximum flow velocity (m/s) |
|---|---|---|
| 1 | 0.5 | 1.5 |
| 2 | 0.8 | 3 |
| 3 | 1.1 | 4.5 |
| ... | ... | ... |

**[Table 6]**

| Level section (level) | Reverse wind velocity (m/s) |
|---|---|
| 1 | 3 |
| 2 | 4 |
| ... | ... |

The process that is performed in step S3 is described in more detail hereafter with reference to the above tables and FIG. 10.

The matters described with reference to FIG. 10 may be individually performed for each of a plurality of line areas 55 and may be periodically performed.

FIG. 10 is a flowchart schematically showing step S3.

In step S302, the RTU 50 can determine whether a measured rainfall is smaller than a preset rainfall threshold. The measured rainfall and the rainfall threshold may be a rainfall per unit time (e.g., a rainfall per one minute).

In detail, when it rains a lot to the surface of a river 51, a measurement signal transmitted from the multipoint radar flow velocity meter 10 may be reflected or dispersed by raindrops hitting against the river 51, and accordingly, the surface flow velocity of the river 51 is not accurately measured. Accordingly, step S302 may correspond to a hunting value removal determination process of a surface flow velocity according to a measured rainfall.

When it is determined that a measured rainfall is larger than or equal to a rainfall threshold in step S302, the RTU 50, in step S304, can calculate the flow velocity at a flow velocity measurement point in the previous interval as the flow velocity at the flow velocity measurement point in the current interval. That is, the RTU 50 can remove a hunting value of the surface flow velocity in the current interval and calculate the flow velocity in the previous interval as the flow velocity in the current interval. The flow velocity at the flow velocity measurement point in the previous interval can be stored in the storage module of the RTU 50.

When it is determined that a measured rainfall is smaller than a rainfall threshold in step S302, the RTU 50, in step S306, can select a first level section including the level (i.e., the current level) of the river 51 from a plurality of preset level sections (see Table 4).

Thereafter, in step S308, the RTU 50 can determine whether the flow velocity at a line area 55 calculated in step S2 is lower than the maximum flow velocity of the first level section (see Table 5).

In detail, the water of the river 51 flows at a flow velocity within a preset maximum flow velocity. In this case, the surface flow velocity of the river 51 may be measured as being higher than the actual surface flow velocity due to a measurement error of the multipoint radar flow velocity meter 10, the environment around the river 51, etc., whereby a flow velocity measurement error may be generated. That is, step S308 may correspond to a determination process on hunting value removal of a surface flow velocity by a measurement error of the multipoint radar flow velocity meter 10, etc.

In particular, since there is the relationship that the higher the level of the river 51, the higher the maximum flow velocity of the river 51, a maximum flow velocity of the river 51 may be individually set for each of a plurality of level sections and the RTU 50 can select a maximum flow velocity of the river 51 in a first level section corresponding to the level of the river 51 and then can compare the flow velocity at the line area 55 and the maximum flow velocity of the river 51 in the first level section.

When it is determined that the flow velocity at the line area 55 is higher than or equal to the maximum flow velocity of the first level section in step S308, the RTU 50, in step S304, can calculate the flow velocity at a flow velocity measurement point in the previous interval as the flow velocity at the flow velocity measurement point in the current interval. That is, the RTU 50 can remove a hunting value of the surface flow velocity in the current interval and calculate the flow velocity in the previous interval as the flow velocity in the current interval.

When it is determined that the flow velocity at the line area 55 is lower than the maximum flow velocity of the first level section in step S308, the RTU 50, in step S310, can determine whether the flow velocity at the line area 55 is higher than the minimum flow velocity of the first level section (see Table 5).

When it is determined that the flow velocity at the line area 55 is lower than or equal to the minimum flow velocity of the first level section in step S310, the RTU 50, in step S312, can determine whether a measured wind direction is included in a range of forward wind direction (see Table 3).

When it is determined that the measured wind direction is not included in the range of forward wind direction in step S312, that is, when it is determined that the measured wind direction is included in a range of reverse wind direction, the RTU 50, in step S314, can determine whether a measured wind velocity is lower than the preset reverse critical wind velocity in the first level section. According to an embodiment, the reverse critical wind velocity may have a value that is proportioned to the degrees of level sections. That is, the higher the level of the river 51, the higher the reverse critical wind velocity may be set.

Meanwhile, step S314 may be omitted, depending on the environment around the river 51. In this case, when it is determined that a measured wind direction is included in the range of reverse wind direction in step S312, step S304 may be performed.

When it is determined that the flow velocity at the line area 55 is lower than or equal to the minimum flow velocity of the first level section, a measured wind direction is included in the range of reverse wind direction, and a measured wind velocity is higher than or equal to the reverse critical wind velocity of the first level section in step S310 to step S314, the RTU 50, in step S304, can calculate the flow velocity at a flow velocity measurement point in the previous interval as the flow velocity at the flow velocity measurement point in the current interval.

In detail, when the surface flow velocity of the river 51 is lower than or equal to a minimum flow velocity **(i.e., a** low flow velocity), a measured wind direction is a reverse wind direction, and a measured wind velocity is higher than the reverse critical wind velocity of the first level section, wind blowing over the river 51 decreases the surface flow velocity of the river 51 or generates large waves on the river 51, thereby being able to greatly increase the flow velocity. In this case, the surface flow velocity of the river 51 is not accurately measured. Accordingly, the RTU 50 can calculate the flow velocity at a flow velocity measurement point in the previous interval as the flow velocity at the flow velocity measurement point in the current interval.

At least one of step S310 to step S314, i) when it is determined that the flow velocity at the line area 55 is higher than the minimum flow velocity of the first level section, or ii) when it is determined that the flow velocity at the line area 55 is lower than or equal to the minimum flow velocity of the first level section but a measured wind direction is included in the range of forward wind direction, or iii) when it is determined that the flow velocity at the line area 55 is lower than or equal to the minimum flow velocity of the first level section, a measured wind direction is included in the range of reverse wind direction, but a measured wind velocity is lower than the reverse critical wind velocity of the first level section, the RTU 50, in step S316, can determine whether the measured wind velocity is lower than the critical wind velocity of the first level section.

When it is determined that a measured wind velocity is lower than the critical wind velocity of the first level section, the RTU 50, in step S318, can set the flow velocity at the line area 55 as the flow velocity at the flow velocity measurement point in the current interval. That is, when a measured wind velocity is lower than the critical wind velocity of the first level section, it is possible to determine that wind blowing over the river 51 does not influence the surface flow velocity of the river 51. Accordingly, the RTU 50 can set the flow velocity at the line area 55, as it is, as the flow velocity at the flow velocity measurement point in the current interval.

When it is determined that a measured wind velocity higher than or equal to the critical wind velocity of the first level section, the RTU 50, in step S320, can correct the flow velocity at the line area 55 on the basis of the flow velocity correction coefficient of the first level section. For example, the RTU 50 can correct the flow velocity at the line area 55 by adding the flow velocity correction coefficient of the first level section to the flow velocity at the line area 55.

In this case, the flow velocity correction coefficient for correcting the flow velocity at the line area 55 can be set or calculated in consideration of the level of the river 51 and the direction of wind blowing over the river 51, as described above. As an example, the flow velocity correction coefficient may be set to correspond to a value increased by 30% from the flow velocity of the river 51 in the same level section without wind. That is, an appropriate flow velocity correction coefficient can be selected and used on the basis of the level of the river 51 and a measured wind velocity.

As a result, step S3 without step S314 can be performed as follows.

When a measured rainfall is less than a rainfall threshold, the flow velocity at the line area 55 exceeds the minimum flow velocity of the first level section and is less than the maximum flow velocity of the first level section, and a measured wind velocity is less than the critical wind velocity of the first level section, the RTU 50 can set the flow velocity at the line area 55 as the flow velocity at a flow velocity measurement point in the current interval.

When a measured rainfall is less than a rainfall threshold, the flow velocity at the line area 55 is less than the maximum flow velocity of the first level section and is the same as or lower than the minimum flow velocity of the first level section, a measured wind direction is included in the range of forward wind direction, and a measured wind velocity is less than the critical wind velocity of the first level section, the RTU 50 can set the flow velocity at the line area 55 as the flow velocity at a flow velocity measurement point in the current interval.

When a measured rainfall is less than a rainfall threshold, the flow velocity at the line area 55 exceeds the minimum flow velocity of the first level section and is less than the maximum flow velocity of the first level section, and a measured wind velocity exceeds the critical wind velocity of the first level section, the RTU 50 can correct the flow velocity at the line area 55 on the basis of the flow velocity correction coefficient of the first level section and can set the corrected flow velocity at the line area 55 as the flow velocity at a flow velocity measurement point in the current interval.

When a measured rainfall is less than a rainfall threshold, the flow velocity at the line area 55 is less than the maximum flow velocity of the first level section and is the same as or lower than the minimum flow velocity of the first level section, a measured wind direction is included in the range of forward wind direction, and a measured wind velocity exceeds the critical wind velocity of the first level section, the RTU 50 can correct the flow velocity at the line area 55 on the basis of the flow velocity correction coefficient of the first level section and can set the corrected flow velocity at the line area 55 as the flow velocity at a flow velocity measurement point in the current interval.

When a measured rainfall exceeds a rainfall threshold, the RTU 50 can set the flow velocity at a flow velocity measurement point in the previous interval as the flow velocity at the flow velocity measurement point in the current interval.

When a measured rainfall is less than a rainfall threshold and the flow velocity at the line area 55 exceeds the maximum flow velocity of the first level section, the RTU 50 can set the flow velocity at a flow velocity measurement point in the previous interval as the flow velocity at the flow velocity measurement point in the current interval.

When a measured rainfall is less than a rainfall threshold, the flow velocity at the line area 55 is less than the maximum flow velocity of the first level section and is the same or lower than the minimum flow velocity of the first level section, and a measured wind direction is not included in the range of forward wind direction, the RTU 50 can set the flow velocity at a flow velocity measurement point in the previous interval as the flow velocity at the flow velocity measurement point in the current interval.

Referring to FIG. 8 again, in step S4, the RTU 50 can measure the flow rate of the river 51 on the basis of the flow velocities at a plurality of flow velocity measurement points and level information of the river 51.

For example, the RTU 50 can measure the flow rate of the river 51 on the basis of a mid-section method, a mean-section method, etc. Since the mid-section method, the mean-section method, etc. are techniques widely known in the art, they are not described in detail.

In short, the river flow measurement system 1 according to an embodiment of the present invention can accurately measure the surface flow velocity of a river by converting various meteorological observation information, such as a wind direction, a wind velocity, and a rainfall around a river, into big data and by data-mining, and accordingly, it is possible to accurately measure the flow rate of the river.

A multipoint radar flow velocity meter, an RTU, and a flow measurement system that have specific shapes and structures were described above with reference to the accompanying drawings in the description of the present invention, and the scope of the invention is defined according to the accompanying claims.

## Claims

1. A multipoint radar flow velocity meter (10) comprising:
an antenna module (11) comprising a transmission antenna (111) configured to transmit a radar electromagnetic wave ,hereafter 'transmission electromagnetic wave', and a plurality of reception antennas (113) configured to receive a plurality of reflective electromagnetic waves, hereafter 'reception electromagnetic waves', generated by reflection of the transmission electromagnetic wave from a Field Of View, "FOV", zone (54) on a surface of a river; and
a processor module (13) configured to create distance information and flow velocity information of each of a plurality of measurement areas in the FOV zone on the basis of an installation angle of the antenna module (11) and information of the transmission electromagnetic wave and the plurality of reception electromagnetic waves,
wherein the processor module (13) comprises:
a mixer (131) configured to mix the transmission electromagnetic wave and the reception electromagnetic waves;
an AD converter (133) configured to convert an analog signal output from the mixer (131) into a digital signal;
a calculator (135) configured to calculate the distance information and the flow velocity information of the measurement areas using the digital signal of the AD converter (133); **characterised in that** the processor module (13) further comprises:
a digital beam former (137) configured to generate multiple beams of a frequency band corresponding to the transmission electromagnetic wave by detecting an output phase of the AD converter (133) and adding a weight to the output phase,
wherein a plurality of line areas (55), included in the FOV zone (54), is set parallel with a flow direction of the river, and
wherein the digital beam former (137) is provided with a digital beam forming algorithm to adjust a maximum range of the surface width of the river by adding or removing the angle of the reception electromagnetic wave from a main lobe of the transmission electromagnetic wave.

2. The multipoint radar flow velocity meter (10) of claim 1, further comprising a gyro sensor (14) configured to provide the installation angle of the antenna module (11).

3. The multipoint radar flow velocity meter (10) of claim 1, wherein the radar electromagnetic wave is a Frequency Modulated Continuous Wave (FMCW), and
the transmission antenna (111) and the reception antennas (113) are disposed on a same plane.

4. The multipoint radar flow velocity meter (10) of claim 1, wherein the processor module (13)
stores in advance a first distance between the multipoint radar flow velocity meter (10) and a level measurement area of the river at a first point of view and a first vertical distance between the multipoint radar flow velocity meter (10) and the surface of the river at the first point of view;
calculates a second distance between the multipoint radar flow velocity meter (10) and the level measurement area at a second point of view on the basis of information of a measurement signal and information of a reflective signal; and
calculates a second vertical distance between the multipoint radar flow velocity meter (10) and the surface of the river at the second point of view on the basis of the first vertical distance, the first distance, and the second distance,
wherein the second point of view is a point of view coming after the first point of view when the first distance changes out of an error range.

5. The multipoint radar flow velocity meter (10) of claim 1, wherein the FOV zone (54) is an area projected on the surface of the river, and
a position and an area of the FOV zone (54) change depending on a level of the river.

6. An Remote Terminal Unit, RTU, (50) comprising:
a communication module (11) configured to receive distance information and flow velocity information of each of the plurality of measurement areas included in a Field Of View, "FOV", zone on a surface of a river from a multipoint radar flow velocity meter (10), configured to receive meteorological observation information around the river from a meteorological sensor (20, 30), and configured to receive level information of the river from a level sensor (40), wherein the meteorological observation information includes a measured rainfall of the river, a measured wind direction, and a measured wind velocity; and
a control module configured to calculate a flow velocity of each of a plurality of line areas (55) parallel to a flow direction of the river on the basis of the distance information and the flow velocity information of each of the plurality of measurement areas, configured to calculate flow velocities at a plurality of flow velocity measurement points corresponding to the flow velocities of the plurality of line areas (55) on the basis of the meteorological observation information around the river, the level information of the river, the flow velocities of the plurality of line areas (55), and preset correction information, and configured to measure a flow rate of the river on the basis of the flow velocities at the plurality of flow velocity measurement points and the level information of the river, wherein the correction information includes a rainfall threshold, a minimum flow velocity and a maximum flow velocity of each of a plurality of level sections, a range of forward wind direction, a reverse critical wind velocity of each of the plurality of level sections, and a plurality of flow velocity correction coefficients respectively of the plurality of level sections,
wherein the control module is configured to calculate the flow velocities at the plurality of flow velocity measurement points at preset intervals, and, for each of the plurality of line areas (55),
when the measured rainfall is less than the rainfall threshold, the flow velocity of the line area (55) exceeds a minimum flow velocity of a first level section including a level of the river among the plurality of level sections and is less than a maximum flow velocity of the first level section, and the measured wind velocity is less than a critical wind velocity of the first level section, the control module calculates the flow velocity of the line area (55) as a flow velocity at a flow velocity measurement point in a current interval,
when the measured rainfall is less than the rainfall threshold, the flow velocity of the line area (55) is the same as or less than the minimum flow velocity of the first level section, the measured wind direction is included in the range of forward wind direction, and the measured wind velocity is less than the critical wind velocity of the first level section, the control module calculates the flow velocity of the line area (55) as the flow velocity at the flow velocity measurement point in the current interval,
when the measured rainfall is less than the rainfall threshold, the flow velocity of the line area (55) exceeds the minimum flow velocity of the first level section and is less than the maximum flow velocity of the first level section, and the measured wind velocity exceeds the critical wind velocity of the first level section, the control module corrects the flow velocity of the line area (55) on the basis of the flow velocity correction coefficients of the first level section and calculates a corrected flow velocity of the line area (55) as the flow velocity at the flow velocity measurement point in the current interval,
when the measured rainfall is less than the rainfall threshold, the flow velocity of the line area (55) is the same as or less than the minimum flow velocity of the first level section, the measured wind direction is included in the range of forward wind direction, and the measured wind velocity exceeds the critical wind velocity of the first level section, the control module calculates the corrected flow velocity of the line area (55) as the flow velocity at the flow velocity measurement point in the current interval,
when the measured rainfall exceeds the rainfall threshold, the control module calculates the pre-stored flow velocity at the flow velocity measurement point of a pre-stored previous interval as the flow velocity at the flow velocity measurement point in the current interval,
when the measured rainfall is less than the rainfall threshold and the flow velocity of the line area (55) exceeds the maximum flow velocity of the first level section, the control module calculates the flow velocity at the flow velocity measurement point of the previous interval as the flow velocity at the flow velocity measurement point of the current interval, and
when the measured rainfall is less than the rainfall threshold, the flow velocity of the line area (55) is the same as or less than the minimum flow velocity of the first level section, and the measured wind direction is not included in the range of forward wind direction, the control module calculates the flow velocity at the flow velocity measurement point of the previous interval as the flow velocity at the flow velocity measurement point of the current interval.

7. The RTU (50) of claim 6, wherein the control module
sets the plurality of line areas (55) each including two or more sub-areas (551) in the FOV zone (54), wherein the two or more sub-areas (551) are spaced apart from each other in the flow direction of the river in the line areas (55);
matches the plurality of measurement areas to the two or more sub-areas (551) of each of the plurality of line areas (55) on the basis of an installation position of the multipoint radar flow velocity meter (10), an installation angle of antennas, and the distance information of each of the plurality of measurement areas; and
sets flow velocities of the two or more sub-areas (551) of each of the plurality of line areas (55) on the basis of matching information of the measurement areas and the sub-areas (551) and the flow velocity information of each of the plurality of measurement areas.

8. The RTU (50) of claim 7, wherein the control module, for each of the plurality of line areas (55), arranges the flow velocities of the two or more sub-areas (551) of the line area (55) in descending order or ascending order and calculates a median flow velocity of the arranged flow velocities of the two or more sub-areas (551) as a flow velocity of the line area (55).

9. A river flow measurement system comprising:
a multipoint radar flow velocity meter (10) accordomg tp any one of claim 1-5; and
an RTU (50) according to any one of claims 6-8.

## Patentansprüche

1. Mehrpunkt-Radar-Durchflussgeschwindigkeitsmesser (10), umfassend:
ein Antennenmodul (11), umfassend eine Sendeantenne (111), die konfiguriert ist, um eine elektromagnetische Radarwelle, im Folgenden "elektromagnetische Sendewelle", zu senden, und eine Vielzahl von Empfangsantennen (113), die konfiguriert sind, um eine Vielzahl von elektromagnetischen Reflexionswellen, im Folgenden "elektromagnetische Empfangswellen", zu empfangen, die durch Reflexion der elektromagnetischen Sendewelle aus einer Sichtfeld, "FOV", -Zone(54) auf einer Oberfläche eines Flusses erzeugt werden; und
ein Prozessormodul (13), das konfiguriert ist, um Abstandsinformationen und Durchflussgeschwindigkeitsinformationen von jedem einer Vielzahl von Messbereichen in der FOV-Zone auf der Grundlage eines Installationswinkels des Antennenmoduls (11) und Informationen der elektromagnetischen Sendewelle und der Vielzahl von elektromagnetischen Empfangswellen zu erzeugen,
wobei das Prozessormodul (13) umfasst:
einen Mischer (131), der konfiguriert ist, um die elektromagnetische Sendewelle und die elektromagnetischen Empfangswellen zu mischen;
einen AD-Wandler (133), der konfiguriert ist, um ein analoges Signal, das von dem Mischer (131) ausgegeben wird, in ein digitales Signal umzuwandeln;
einen Rechner (135), der konfiguriert ist, um die Abstandsinformationen und die Durchflussgeschwindigkeitsinformationen der Messbereiche unter Verwendung des digitalen Signals des AD-Wandlers (133) zu berechnen; **dadurch gekennzeichnet, dass** das Prozessormodul (13) ferner umfasst:
einen digitalen Strahlformer (137), der konfiguriert ist, um mehrere Strahlen eines Frequenzbands, das der elektromagnetischen Sendewelle entspricht, durch Erfassen einer Ausgangsphase des AD-Wandlers (133) und Addieren einer Gewichtung zu der Ausgangsphase zu erzeugen,
wobei eine Vielzahl von Linienbereichen (55), die in der FOV-Zone (54) enthalten sind, parallel zu einer Durchflussrichtung des Flusses eingestellt ist, und
wobei der digitale Strahlformer (137) mit einem digitalen Strahlformungsalgorithmus versehen ist, um einen maximalen Bereich der Oberflächenbreite des Flusses durch Addieren oder Entfernen des Winkels der elektromagnetischen Empfangswelle von einer Hauptkeule der elektromagnetischen Sendewelle einzustellen.

2. Mehrpunkt-Radar-Durchflussgeschwindigkeitsmesser (10) nach Anspruch 1, ferner umfassend einen Kreiselsensor (14), der konfiguriert ist, um den Installationswinkel des Antennenmoduls (11) bereitzustellen.

3. Mehrpunkt-Radar-Durchflussgeschwindigkeitsmesser (10) nach Anspruch 1, wobei die elektromagnetische Radarwelle eine frequenzmodulierte kontinuierliche Welle (FMCW) ist, und
die Sendeantenne (111) und die Empfangsantennen (113) auf einer gleichen Ebene angeordnet sind.

4. Mehrpunkt-Radar-Durchflussgeschwindigkeitsmesser (10) nach Anspruch 1, wobei das Prozessormodul (13)
im Voraus einen ersten Abstand zwischen dem Mehrpunkt-Radar-Durchflussgeschwindigkeitsmesser (10) und einem Niveaumessbereich des Flusses an einem ersten Blickpunkt und einen ersten vertikalen Abstand zwischen dem Mehrpunkt-Radar-Durchflussgeschwindigkeitsmesser (10) und der Oberfläche des Flusses an dem ersten Blickpunkt speichert;
einen zweiten Abstand zwischen dem Mehrpunkt-Radar-Durchflussgeschwindigkeitsmesser (10) und dem Niveaumessbereich an einem zweiten Blickpunkt auf der Grundlage von Informationen eines Messsignals und Informationen eines Reflexionssignals berechnet; und
einen zweiten vertikalen Abstand zwischen dem Mehrpunkt-Radar-Durchflussgeschwindigkeitsmesser (10) und der Oberfläche des Flusses an dem zweiten Blickpunkt auf der Grundlage des ersten vertikalen Abstands, des ersten Abstands und des zweiten Abstands berechnet,
wobei der zweite Blickpunkt ein Blickpunkt ist, der nach dem ersten Blickpunkt kommt, wenn sich der erste Abstand aus einem Fehlerbereich heraus ändert.

5. Mehrpunkt-Radar-Durchflussgeschwindigkeitsmesser (10) nach Anspruch 1, wobei die FOV-Zone (54) ein Bereich ist, der auf die Oberfläche des Flusses projiziert wird, und
sich eine Position und ein Bereich der FOV-Zone (54) in Abhängigkeit von einem Niveau des Flusses ändern.

6. Fernbedienungsterminal, RTU, (50), umfassend:
ein Kommunikationsmodul (11), das konfiguriert ist, um Abstandsinformationen und Durchflussgeschwindigkeitsinformationen von jedem der Vielzahl von Messbereichen, die in einer Sichtfeld, "FOV", -Zone auf einer Oberfläche eines Flusses enthalten sind, von einem Mehrpunkt-Radar-Durchflussgeschwindigkeitsmesser (10) zu empfangen, das konfiguriert ist, um meteorologische Beobachtungsinformationen um den Fluss von einem meteorologischen Sensor (20, 30) zu empfangen, und das konfiguriert ist, um Niveauinformationen des Flusses von einem Niveausensor (40) zu empfangen, wobei die meteorologischen Beobachtungsinformationen einen gemessenen Niederschlag des Flusses, eine gemessene Windrichtung und eine gemessene Windgeschwindigkeit enthalten; und
ein Steuermodul, das konfiguriert ist, um eine Durchflussgeschwindigkeit von jedem einer Vielzahl von Linienbereichen (55) parallel zu einer Durchflussrichtung des Flusses auf der Grundlage der Abstandsinformationen und der Durchflussgeschwindigkeitsinformationen von jedem der Vielzahl von Messbereichen zu berechnen, das konfiguriert ist, um Durchflussgeschwindigkeiten an einer Vielzahl von Durchflussgeschwindigkeitsmesspunkten, die den Durchflussgeschwindigkeiten der Vielzahl von Linienbereichen (55) entsprechen, auf der Grundlage der meteorologischen Beobachtungsinformationen um den Fluss, der Niveauinformationen des Flusses, der Durchflussgeschwindigkeiten der Vielzahl von Linienbereichen (55) und voreingestellter Korrekturinformationen zu berechnen, und das konfiguriert ist, um eine Durchflussrate des Flusses auf der Grundlage der Durchflussgeschwindigkeiten an der Vielzahl von Durchflussgeschwindigkeitsmesspunkten und der Niveauinformationen des Flusses zu messen, wobei die Korrekturinformationen einen Niederschlagsschwellenwert, eine minimale Durchflussgeschwindigkeit und eine maximale Durchflussgeschwindigkeit von jedem einer Vielzahl von Niveauabschnitten, einen Bereich der Vorwärtswindrichtung, eine kritische Rückwärtswindgeschwindigkeit von jedem der Vielzahl von Niveauabschnitten und eine Vielzahl von Durchflussgeschwindigkeitskorrekturkoeffizienten jeweils der Vielzahl von Niveauabschnitten enthalten,
wobei das Steuermodul konfiguriert ist, um die Durchflussgeschwindigkeiten an der Vielzahl von Durchflussgeschwindigkeitsmesspunkten in voreingestellten Intervallen und für jeden der Vielzahl von Linienbereichen (55) zu berechnen,
wenn der gemessene Niederschlag kleiner als der Niederschlagsschwellenwert ist, die Durchflussgeschwindigkeit des Linienbereichs (55) eine minimale Durchflussgeschwindigkeit eines ersten Niveauabschnitts, der ein Niveau des Flusses unter der Vielzahl von Niveauabschnitten enthält, überschreitet und kleiner als eine maximale Durchflussgeschwindigkeit des ersten Niveauabschnitts ist, und die gemessene Windgeschwindigkeit kleiner als eine kritische Windgeschwindigkeit des ersten Niveauabschnitts ist, das Steuermodul die Durchflussgeschwindigkeit des Linienbereichs (55) als eine Durchflussgeschwindigkeit an einem Durchflussgeschwindigkeitsmesspunkt in einem aktuellen Intervall berechnet,
wenn der gemessene Niederschlag kleiner als der Niederschlagsschwellenwert ist, die Durchflussgeschwindigkeit des Linienbereichs (55) gleich oder kleiner als die minimale Durchflussgeschwindigkeit des ersten Niveauabschnitts ist, die gemessene Windrichtung in dem Bereich der Vorwärtswindrichtung enthalten ist und die gemessene Windgeschwindigkeit kleiner als die kritische Windgeschwindigkeit des ersten Niveauabschnitts ist, das Steuermodul die Durchflussgeschwindigkeit des Linienbereichs (55) als die Durchflussgeschwindigkeit an dem Durchflussgeschwindigkeitsmesspunkt in dem aktuellen Intervall berechnet,
wenn der gemessene Niederschlag kleiner als der Niederschlagsschwellenwert ist, die Durchflussgeschwindigkeit des Linienbereichs (55) die minimale Durchflussgeschwindigkeit des ersten Niveauabschnitts überschreitet und kleiner als die maximale Durchflussgeschwindigkeit des ersten Niveauabschnitts ist und die gemessene Windgeschwindigkeit die kritische Windgeschwindigkeit des ersten Niveauabschnitts überschreitet, das Steuermodul die Durchflussgeschwindigkeit des Linienbereichs (55) auf der Grundlage der Durchflussgeschwindigkeitskorrekturkoeffizienten des ersten Niveauabschnitts korrigiert und eine korrigierte Durchflussgeschwindigkeit des Linienbereichs (55) als die Durchflussgeschwindigkeit an dem Durchflussgeschwindigkeitsmesspunkt in dem aktuellen Intervall berechnet,
wenn der gemessene Niederschlag kleiner als der Niederschlagsschwellenwert ist, die Durchflussgeschwindigkeit des Linienbereichs (55) gleich oder kleiner als die minimale Durchflussgeschwindigkeit des ersten Niveauabschnitts ist, die gemessene Windrichtung in dem Bereich der Vorwärtswindrichtung enthalten ist und die gemessene Windgeschwindigkeit die kritische Windgeschwindigkeit des ersten Niveauabschnitts überschreitet, das Steuermodul die korrigierte Durchflussgeschwindigkeit des Linienbereichs (55) als die Durchflussgeschwindigkeit an dem Durchflussgeschwindigkeitsmesspunkt in dem aktuellen Intervall berechnet,
wenn der gemessene Niederschlag den Niederschlagsschwellenwert überschreitet, das Steuermodul die vorgespeicherte Durchflussgeschwindigkeit an dem Durchflussgeschwindigkeitsmesspunkt eines vorgespeicherten vorherigen Intervalls als die Durchflussgeschwindigkeit an dem Durchflussgeschwindigkeitsmesspunkt in dem aktuellen Intervall berechnet,
wenn der gemessene Niederschlag kleiner als der Niederschlagsschwellenwert ist und die Durchflussgeschwindigkeit des Linienbereichs (55) die maximale Durchflussgeschwindigkeit des ersten Niveauabschnitts überschreitet, das Steuermodul die Durchflussgeschwindigkeit an dem Durchflussgeschwindigkeitsmesspunkt des vorherigen Intervalls als die Durchflussgeschwindigkeit an dem Durchflussgeschwindigkeitsmesspunkt des aktuellen Intervalls berechnet, und
wenn der gemessene Niederschlag kleiner als der Niederschlagsschwellenwert ist, die Durchflussgeschwindigkeit des Linienbereichs (55) gleich oder kleiner als die minimale Durchflussgeschwindigkeit des ersten Niveauabschnitts ist und die gemessene Windrichtung nicht in dem Bereich der Vorwärtswindrichtung enthalten ist, das Steuermodul die Durchflussgeschwindigkeit an dem Durchflussgeschwindigkeitsmesspunkt des vorherigen Intervalls als die Durchflussgeschwindigkeit an dem Durchflussgeschwindigkeitsmesspunkt des aktuellen Intervalls berechnet.

7. RTU (50) nach Anspruch 6, wobei das Steuermodul
die Vielzahl von Linienbereichen (55) einstellt, die jeweils zwei oder mehr Unterbereiche (551) in der FOV-Zone (54) enthalten, wobei die zwei oder mehr Unterbereiche (551) in der Durchflussrichtung des Flusses in den Linienbereichen (55) voneinander beabstandet sind;
die Vielzahl von Messbereichen mit den zwei oder mehr Unterbereichen (551) von jedem der Vielzahl von Linienbereichen (55) auf der Grundlage einer Installationsposition des Mehrpunkt-Radar-Durchflussgeschwindigkeitsmessers (10), eines Installationswinkels von Antennen und der Abstandsinformationen von jedem der Vielzahl von Messbereichen abgleicht; und
Durchflussgeschwindigkeiten der zwei oder mehr Unterbereiche (551) von jedem der Vielzahl von Linienbereichen (55) auf der Grundlage von Abgleichinformationen der Messbereiche und der Unterbereiche (551) und der Durchflussgeschwindigkeitsinformationen von jedem der Vielzahl von Messbereichen einstellt.

8. RTU (50) nach Anspruch 7, wobei das Steuermodul für jeden der Vielzahl von Linienbereichen (55) die Durchflussgeschwindigkeiten der zwei oder mehr Unterbereiche (551) des Linienbereichs (55) in absteigender Reihenfolge oder aufsteigender Reihenfolge anordnet und eine mittlere Durchflussgeschwindigkeit der angeordneten Durchflussgeschwindigkeiten der zwei oder mehr Unterbereiche (551) als eine Durchflussgeschwindigkeit des Linienbereichs (55) berechnet.

9. Flussdurchflussmesssystem, umfassend:
einen Mehrpunkt-Radar-Durchflussgeschwindigkeitsmesser (10) nach einem der Ansprüche 1-5; und
ein RTU (50) nach einem der Ansprüche 6-8.

## Revendications

1. Débitmètre de vitesse d'écoulement radar multipoint (10) comprenant :
un module d'antenne (11) comprenant une antenne d'émission (111) configurée pour émettre une onde électromagnétique radar, ci-après dénommée "onde électromagnétique d'émission", et une pluralité d'antennes de réception (113) configurées pour recevoir une pluralité d'ondes électromagnétiques de réflexion, ci-après dénommées "ondes électromagnétiques de réception", générées par la réflexion de l'onde électromagnétique d'émission depuis un secteur de champ de vision "FOV" (54) sur une surface d'un cours d'eau ; et
un module de processeur (13) configuré pour créer des informations de distance et des informations de vitesse d'écoulement de chacune d'une pluralité de zones de mesure dans le secteur FOV sur la base d'un angle d'installation du module d'antenne (11) et d'informations de l'onde électromagnétique d'émission et de la pluralité d'ondes électromagnétiques de réception,
dans lequel
le module de processeur (13) comprend :
un mélangeur (131) configuré pour mélanger l'onde électromagnétique d'émission et les ondes électromagnétiques de réception ;
un convertisseur A/N [analogique-numérique] (133) configuré pour convertir un signal analogique délivré par le mélangeur (131) en un signal numérique ;
un calculateur (135) configuré pour calculer les informations de distance et les informations de vitesse d'écoulement des zones de mesure en utilisant le signal numérique du convertisseur A/N (133) ;
**caractérisé en ce que** le module de processeur (13) comprend en outre :
un dispositif de formation de faisceau numérique (137) configuré pour générer de multiples faisceaux d'une bande de fréquences correspondant à l'onde électromagnétique d'émission en détectant une phase de sortie du convertisseur A/N (133) et en ajoutant un poids à la phase de sortie,
dans lequel une pluralité de zones de ligne (55) comprises dans le secteur FOV (54) sont définies parallèlement à une direction d'écoulement du cours d'eau, et
dans lequel le dispositif de formation de faisceau numérique (137) est pourvu d'un algorithme de formation de faisceau numérique pour ajuster une plage maximale de la largeur de surface du cours d'eau en ajoutant l'angle de l'onde électromagnétique de réception à un lobe principal de l'onde électromagnétique d'émission ou en le soustrayant de celui-ci.

2. Débitmètre de vitesse d'écoulement radar multipoint (10) selon la revendication 1, comprenant en outre un capteur gyroscopique (14) configuré pour fournir l'angle d'installation du module d'antenne (11).

3. Débitmètre de vitesse d'écoulement radar multipoint (10) selon la revendication 1, dans lequel l'onde électromagnétique radar est une onde continue modulée en fréquence (FMCW), et
l'antenne d'émission (111) et les antennes de réception (113) sont disposées dans un même plan.

4. Débitmètre de vitesse d'écoulement radar multipoint (10) selon la revendication 1, dans lequel le module de processeur (13)
stocke au préalable une première distance entre le débitmètre de vitesse d'écoulement radar multipoint (10) et une zone de mesure de niveau du cours d'eau à un premier point de vue, et une première distance verticale entre le débitmètre de vitesse d'écoulement radar multipoint (10) et la surface du cours d'eau au premier point de vue ;
calcule une deuxième distance entre le débitmètre de vitesse d'écoulement radar multipoint (10) et la zone de mesure de niveau à un deuxième point de vue sur la base d'informations d'un signal de mesure et d'informations d'un signal de réflexion ; et
calcule une deuxième distance verticale entre le débitmètre de vitesse d'écoulement radar multipoint (10) et la surface du cours d'eau au deuxième point de vue sur la base de la première distance verticale, de la première distance et de la deuxième distance,
dans lequel le deuxième point de vue est un point de vue qui vient après le premier point de vue lorsque la première distance change pour sortir d'une plage d'erreur.

5. Débitmètre de vitesse d'écoulement radar multipoint (10) selon la revendication 1, dans lequel le secteur FOV (54) est une zone projetée sur la surface du cours d'eau, et
une position et une zone du secteur FOV (54) changent en fonction d'un niveau du cours d'eau.

6. Unité terminale distante, RTU, (50) comprenant :
un module de communication (11) configuré pour recevoir des informations de distance et des informations de vitesse d'écoulement de chacune de la pluralité de zones de mesure comprises dans un secteur de champ de vision "FOV" sur une surface d'un cours d'eau en provenance d'un débitmètre de vitesse d'écoulement radar multipoint (10) configuré pour recevoir d'un capteur météorologique (20, 30) des informations d'observation météorologique autour du cours d'eau, et configuré pour recevoir d'un capteur de niveau (40) des informations de niveau du cours d'eau, dans laquelle les informations d'observation météorologique comportent une mesure de hauteur pluviométrique du cours d'eau, une mesure de direction du vent et une mesure de vitesse du vent ; et
un module de commande configuré pour calculer une vitesse d'écoulement de chacune d'une pluralité de zones de ligne (55) parallèles à une direction d'écoulement du cours d'eau sur la base des informations de distance et des informations de vitesse d'écoulement de chacune de la pluralité de zones de mesure, configuré pour calculer les vitesses d'écoulement à une pluralité de points de mesure de vitesse d'écoulement correspondant aux vitesses d'écoulement de la pluralité de zones de ligne (55) sur la base des informations d'observation météorologique autour du cours d'eau, des informations de niveau du cours d'eau, des vitesses d'écoulement de la pluralité de zones de ligne (55) et d'informations de correction prédéfinies, et configuré pour mesurer un débit du cours d'eau sur la base des vitesses d'écoulement à la pluralité de points de mesure de vitesse d'écoulement et des informations de niveau du cours d'eau, dans laquelle les informations de correction comportent un seuil de hauteur pluviométrique, une vitesse d'écoulement minimale et une vitesse d'écoulement maximale de chacune d'une pluralité de sections de niveau, une plage de direction du vent en sens direct, une vitesse critique en sens inverse du vent de chacune de la pluralité de sections de niveau, et une pluralité de coefficients de correction de vitesse d'écoulement respectifs de la pluralité de sections de niveau,
dans laquelle le module de commande est configuré pour calculer les vitesses d'écoulement à la pluralité de points de mesure de vitesse d'écoulement à des intervalles prédéfinis pour chacune de la pluralité de zones de ligne (55),
lorsque la mesure de hauteur pluviométrique est inférieure au seuil de hauteur pluviométrique, que la vitesse d'écoulement de la zone de ligne (55) dépasse une vitesse d'écoulement minimale d'une première section incluant un niveau du cours d'eau parmi la pluralité de sections de niveau et est inférieure à une vitesse d'écoulement maximale de la première section de niveau, et que la mesure de vitesse du vent est inférieure à une vitesse du vent critique de la première section de niveau, le module de commande calcule la vitesse d'écoulement de la zone de ligne (55) en tant que vitesse d'écoulement à un point de mesure de vitesse d'écoulement dans un intervalle actuel,
lorsque la mesure de hauteur pluviométrique est inférieure au seuil de hauteur pluviométrique, que la vitesse d'écoulement de la zone de ligne (55) est inférieure ou égale à la vitesse d'écoulement minimale de la première section de niveau, que la mesure de direction du vent est comprise dans la plage de direction du vent en sens direct, et que la mesure de vitesse du vent est inférieure à la vitesse du vent critique de la première section de niveau, le module de commande calcule la vitesse d'écoulement de la zone de ligne (55) en tant que vitesse d'écoulement au point de mesure de vitesse d'écoulement dans l'intervalle actuel,
lorsque la mesure de hauteur pluviométrique est inférieure au seuil de hauteur pluviométrique, que la vitesse d'écoulement de la zone de ligne (55) dépasse la vitesse d'écoulement minimale de la première section de niveau et est inférieure à la vitesse d'écoulement maximale de la première section de niveau, et que la mesure de vitesse du vent dépasse la vitesse du vent critique de la première section de niveau, le module de commande corrige la vitesse d'écoulement de la zone de ligne (55) sur la base des coefficients de correction de vitesse d'écoulement de la première section de niveau et calcule une vitesse d'écoulement corrigée de la zone de ligne (55) en tant que vitesse d'écoulement au point de mesure de vitesse d'écoulement dans l'intervalle actuel,
lorsque la mesure de hauteur pluviométrique est inférieure au seuil de hauteur pluviométrique, que la vitesse d'écoulement de la zone de ligne (55) est inférieure ou égale à la vitesse d'écoulement minimale de la première section de niveau, que la mesure de direction du vent est comprise dans la plage de direction du vent en sens direct, et que la mesure de vitesse du vent dépasse la vitesse du vent critique de la première section de niveau, le module de commande calcule la vitesse d'écoulement corrigée de la zone de ligne (55) en tant que vitesse d'écoulement au point de mesure de vitesse d'écoulement dans l'intervalle actuel,
lorsque la mesure de hauteur pluviométrique dépasse le seuil de hauteur pluviométrique, le module de commande calcule la vitesse d'écoulement préalablement stockée au point de mesure de vitesse d'écoulement d'un intervalle précédent préalablement stocké en tant que vitesse d'écoulement au point de mesure de vitesse d'écoulement dans l'intervalle actuel,
lorsque la mesure de hauteur pluviométrique est inférieure au seuil de hauteur pluviométrique et que la vitesse d'écoulement de la zone de ligne (55) dépasse la vitesse d'écoulement maximale de la première section de niveau, le module de commande calcule la vitesse d'écoulement au point de mesure de vitesse d'écoulement de l'intervalle précédent en tant que vitesse d'écoulement au point de mesure de vitesse d'écoulement dans l'intervalle actuel, et
lorsque la mesure de hauteur pluviométrique est inférieure au seuil de hauteur pluviométrique, que la vitesse d'écoulement de la zone de ligne (55) est inférieure ou égale à la vitesse d'écoulement minimale de la première section de niveau, et que la mesure de direction du vent n'est pas comprise dans la plage de direction du vent en sens direct, le module de commande calcule la vitesse d'écoulement au point de mesure de vitesse d'écoulement de l'intervalle précédent en tant que vitesse d'écoulement au point de mesure de vitesse d'écoulement dans l'intervalle actuel.

7. RTU (50) selon la revendication 6, dans laquelle le module de commande
définit la pluralité de zones de ligne (55) comportant chacune deux sous-zones (551) ou plus dans le secteur FOV (54), dans laquelle les deux sous-zones (551) ou plus sont espacées les unes des autres dans la direction d'écoulement du cours d'eau dans les zones de ligne (55) ;
établit une concordance entre la pluralité de zones de mesure et les deux sous-zones (551) ou plus de chacune de la pluralité de zones de ligne (55) sur la base d'une position d'installation du débitmètre de vitesse d'écoulement radar multipoint (10), d'un angle d'installation des antennes et des informations de distance de chacune de la pluralité de zones de mesure ; et
définit des vitesses d'écoulement des deux sous-zones (551) ou plus de chacune de la pluralité de zones de ligne (55) sur la base d'informations de concordance des zones de mesure et des sous-zones (551) et des informations de vitesse d'écoulement de chacune de la pluralité de zones de mesure.

8. RTU (50) selon la revendication 7, dans laquelle, pour chacune de la pluralité de zones de ligne (55), le module de commande organise les vitesses d'écoulement des deux sous-zones (551) ou plus de la zone de ligne (55) par ordre décroissant ou croissant et calcule une vitesse d'écoulement médiane des vitesses d'écoulement organisées des deux sous-zones (551) ou plus en tant que vitesse d'écoulement de la zone de ligne (55).

9. Système de mesure d'écoulement de cours d'eau comprenant :
un débitmètre de vitesse d'écoulement radar multipoint (10) selon l'une quelconque des revendications 1 à 5 ; et
une RTU (50) selon l'une quelconque des revendications 6 à 8.
